# EUROPEAN PATENT SPECIFICATION

(11) **EP 0 748 577 B1**
(45) Date of publication and mention of the grant of the patent: **09.12.1998**
(21) Application number: 95907758.7
(22) Date of filing: 09.02.1995
(51) Int. Cl.: H05B 6/12, H05B 6/06

(54) **INDUCTION HEATING ELEMENT**
INDUKTIVES HEIZELELEMENT
ELEMENT CHAUFFANT PAR INDUCTION

(30) Priority: 09.02.1994 GB 9402495
(43) Date of publication of application: 18.12.1996
(73) Proprietor: INDUCED ENERGY LTD., Bicester, Oxfordshire OX6 9JT (GB)
(72) Inventor: SNOWBALL, Malcolm, Robert, Epping Essex CM16 6TW (GB)
(74) Representative: Evans, Huw David Duncan
(86) International application number: GB9500258
(87) International publication number: WO9522239

(56) References cited:
- EP-A- 0 158 353
- EP-A- 0 561 208
- FR-A- 997 266
- FR-A- 2 657 486
- US-A- 4 029 926
- US-A- 4 467 162

## Description

This invention relates to an induction heating element comprising a flat spirally-wound coil disposed on the upper surface of a flat former.

US 4 029 926 discloses cooking hobs which comprises an induction heating element of the above-mentioned type. In use, a high frequency electrical signal (in excess of 20 KHz) is applied to the coil, which generates a magnetic field that induces secondary currents in the base of a conductive cooking pan disposed on the hob. The base of the pan is not an ideal conductor, thus as the current flows electrical energy is dissipated as heat in the base of the pan. This type of heating is able to deliver up to 5KW of heating power directly into the base of the pan. Thus, cooking hobs of this type are extremely fast and efficient.

The magnetic field around the coil induces a current in any conductive objects which come within the field. Thus, the coil has to be spaced apart from metal components in the housing of the hob, in order to avoid any undesirable heating of these. The efficiency of space utilisation in induction cooking hobs is therefore poor, owing to the large space isolation required around the coils.

Thus, in accordance with this invention there is provided an induction heating element of the above-mentioned type which is characterised in that a base of magnetically permeable material is disposed on the under side of the former adjacent at least an external part of the coil.

In use, the lines of magnetic flux around the coil flow through the magnetically permeable element rather than through the surrounding casing of the hob, which is less permeable.

Preferably one side of the coil is exposed so that the magnetic field is projected outwardly from that side to heat conductive cooking utensils inductively coupled with the coil.

Preferably the base is circular. The circular base shields any surrounding metalwork from the magnetic field and also focuses the field upwardly towards the heating area.

Preferably the former comprises a spirally-extending groove in its upper surface for receiving the conductor.

Preferably the former comprises a plastics material, preferably having a high thermal conductivity. The material of the former enables any heat in the coil to be rapidly and evenly transferred.

It will be appreciated that the former keeps the surface of the coil flat. Uneven electromagnetic coupling with the pan will occur if the surface of the coil is uneven, and thus hot spots will occur owing to the uneven energy transfer. A flat surface to the coil minimises hot spots, due to each turn being exactly the same distance from the pan.

Preferably the element comprises ferrite material, which raises the inductive reactance of the coil.

Induction heating coils are generally driven by a high> frequency supply current. At these high frequencies current tends to flow only in a thin layer adjacent the surface of the conductor, rather than in its full cross sectional area. This so-called skin effect causes increased I²R losses, owing to the increased current density flowing through the surface layer of the conductor.

Thus, preferably the coil comprises a plurality of parallel connected conductors.

Thus, at high frequencies the skin effect is minimised by using a plurality of conductors to pass the current. The combined surface area of these conductors is much greater than the effective surface area of a conventional conductor, thus the I²R losses are minimised.

Preferably each conductor comprises a plurality of conductive strips or circular-section conductors connected in parallel. Preferably the conductors are insulated from each other. Preferably the conductors form a winding, which is also preferably insulated.

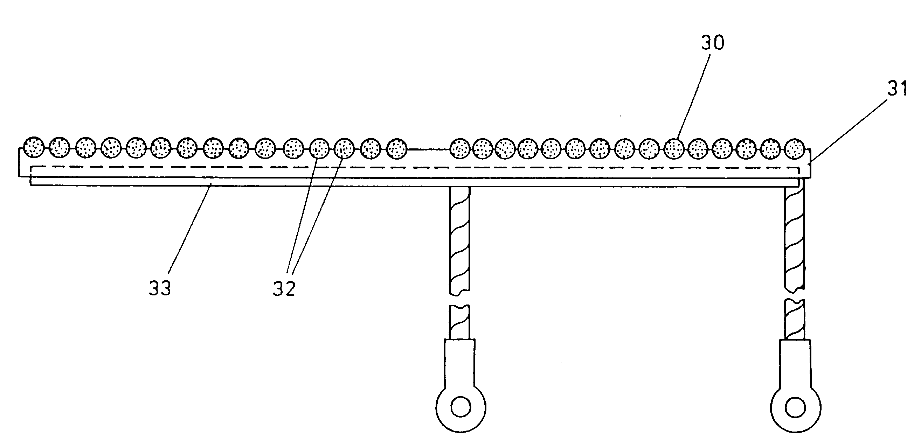

An embodiment of this invention will now be described by way of examples only, and with reference to the accompanying drawings, the single figure of which is a sectional view through an induction heating element in accordance with this invention.

Referring to the drawing, there is shown an induction heating element comprising a flat spirally-wound coil 30 disposed on a circular former 31 formed from a plastics material having a high thermal conductivity. The former 31 comprises a spirally-extending groove 32 in its upper surface, in which the conductor of the coil is wound.

A flat circular base 33 of a highly magnetically permeable material, such as ferrite, is recessed into the underside of the former 31.

The coil 30 comprises a single circular-section winding which consists of a plurality of circular-section conductors coated with an insulating material. The winding is twisted from end-to-end, such that each conductor extends in a helical fashion. This arrangement gives a shallow coil which is less susceptible to skin effects, and thus runs at a lower temperature than conventional coils.

The coil winding is sufficiently flexible to enable the coil to be wound almost to the centre, so that uneven heating of the pan is avoided.

In use, when a high frequency supply is connected between the coil terminals, the coil generates a magnetic field. The lines of magnetic flux extend upwardly into free space.

Conductive cooking utensils placed on the upper surface of the heating element inductively couple with the coil, and secondary alternating currents are developed in the utensils. These currents develop I²R losses owing to the resistance of the material from which the utensil is formed: this generated heat may be used for cooking.

## Claims

1. An induction heating element comprising a flat spirally-wound coil (30) disposed on the upper surface of a flat former (31) characterised in that a base (33) of magnetically permeable material is disposed on the under side of the former (31) adjacent at least an external part of the coil (30).

2. An induction heating element as claimed in claim 1, characterised in that a groove (32) is formed in the upper surface of the former (31) for receiving the spirally-wound coil (30).

3. An induction heating element as claimed in claims 1 or 2, characterised in that the former (31) comprises a plastics material.

4. An induction heating element as claimed in claim 3, characterised in that the plastics material has a high thermal conductivity.

5. An induction heating element as claimed in any preceding claim, characterised in that the coil (30) comprises a plurality of parallel-connected conductors.

6. An induction heating element as claimed in claim 5, characterised in that conductors are insulated from each other.

7. An induction heating element as claimed in claims 5 or 6, characterised in that the conductors are circular in section.

8. An induction heating element as claimed in claims 5 or 6, characterised in that the conductors comprise strips of conductive material.

9. An induction heating element as claimed in any preceding claim, characterised in that the base (33) is circular.

## Patentansprüche

1. Induktions-Heizelement enthaltend eine flache, spiralförmig gewundene Spule (30), welche auf der oben liegenden Oberfläche einer flachen Wickelschablone (31) angeordnet ist, dadurch gekennzeichnet, daß an der unteren Seite der Wikkelschablone (31) neben wenigstens einem äußeren Teil der Spule (30) eine Basis (33) magnetisch permeablen Materials angeordnet ist.

2. Induktions-Heizelement nach Anspruch 1, dadurch gekennzeichnet, daß in der oben liegenden Oberfläche der Wickelschablone (31) eine Nut (32) zur Aufnahme der spiralförmig gewundenen Spule (30) ausgeformt ist.

3. Induktions-Heizelement nach Anspruch 1 oder 2, dadurch gekennzeichnet, daß die Wickelschablone (31) ein Kunststoffmaterial umfaßt.

4. Induktions-Heizelement nach Anspruch 3, dadurch gekennzeichnet, daß das Kunststoffmaterial eine hohe Wärmeleitfähigkeit aufweist.

5. Induktions-Heizelement nach einem der vorstehenden Ansprüche, dadurch gekennzeichnet, daß die Spule (30) eine Mehrzahl von parallel geschalteten Leitern umfaßt.

6. Induktions-Heizelement nach Anspruch 5, dadurch gekennzeichnet, daß die Leiter voneinander isoliert sind.

7. Induktions-Heizelement nach Anspruch 5 oder 6, dadurch gekennzeichnet, daß die Leiter einen runden Querschnitt aufweisen.

8. Induktions-Heizelement nach Anspruch 5 oder 6, dadurch gekennzeichnet, daß die Leiter Streifen eines leitenden Materials umfassen.

9. Induktions-Heizelement nach einem der vorstehenden Ansprüche, dadurch gekennzeichnet, daß die Basis (33) rund ist.

## Revendications

1. Elément chauffant par induction comprenant une bobine plate (30) enroulée en spirale, disposée sur la surface supérieure d'un mandrin plat (31), caractérisé en ce qu'une base (33) en matériau magnétiquement perméable est disposée sur le dessous du mandrin (31) à proximité d'au moins une partie externe de la bobine (30).

2. Elément chauffant par induction selon la revendication 1, caractérisé en ce qu'un sillon (32) est formé dans la surface supérieure du mandrin (31) en vue de recevoir la bobine (30) enroulée en spirale.

3. Elément chauffant par induction selon les revendications 1 ou 2, caractérisé en ce que le mandrin (31) est composé d'une manière plastique.

4. Elément chauffant par induction selon la revendication 3, caractérisé en ce que la matière plastique présente une conductibilité thermique élevée.

5. Elément chauffant par induction selon l'une quelconque des revendications précédentes, caractérisé en ce que la bobine (30) est composée d'une pluralité de conducteurs branchés en parallèle.

6. Elément chauffant par induction selon la revendication 5, caractérisé en ce que les conducteurs sont isolés les uns des autres.

7. Elément chauffant par induction selon les revendications 5 ou 6, caractérisé en ce que les conducteurs sont de section circulaire.

8. Elément chauffant par induction selon les revendications 5 ou 5, caractérisé en ce que les conducteurs sont composés de bandes de matériau conducteur.

9. Elément chauffant par induction selon l'une quelconque des revendications précédentes, caractérisé en ce que la base (33) est circulaires
